# EUROPEAN PATENT SPECIFICATION

(11) **EP 0 994 078 B1**
(45) Date of publication and mention of the grant of the patent: **26.11.2003**
(21) Application number: 99119512.4
(22) Date of filing: 01.10.1999
(51) Int. Cl.: C03B 37/012

(54) **Method for producing quartz glass preform for optical fibers**
Verfahren zum Herstellen einer Vorform aus Quarzglas für optische Fasern
Procédé de fabication d une preforme en verre de silice pour fibres optiques

(30) Priority: 16.10.1998 JP 31411398
(43) Date of publication of application: 19.04.2000
(73) Proprietor: Heraeus Tenevo AG, 63450 Hanau (DE); Shin-Etsu Quartz Products Co.,Ltd., Shinjuku-ku Tokyo (JP)
(72) Inventor: Shimada, Atsushi, Koriyama-shi, Fukushima 963-0111 (JP); Kato, Toshiyuki, Koriyama-shi, Fukushima 963-0702 (JP); Suzuki, Masanori, Koriyama-shi, Fukushima 963-8041 (JP); Watabe, Yutaka, Koriyama-shi, Fukishima 963-0104 (JP)
(74) Representative: Staudt, Armin, Dipl.-Ing.

(56) References cited:
- EP-A- 0 501 429
- EP-A- 0 598 349
- DE-A- 3 731 346
- US-A- 3 877 912
- PATENT ABSTRACTS OF JAPAN vol. 16, no. 190, 8 May 1992 (1992-05-08) & JP 04 026524 A (FURUKAWA ELECTRIC CO. LTD.), 29 January 1992 (1992-01-29)

## Description

### Industrial Field of Application

The present invention relates to a method for producing a quartz glass preform for optical fibers, and in further detail, it relates to a method for producing a large scale quartz glass preform for optical fibers having high circularity at a low cost and with a good productivity.

### Background of the Invention

Recently, larger amounts of optical fibers are being used, particularly, single mode optical fibers. However, it is expected that a still larger amount of optical fibers will be necessary with the expansion in their field of usage ranging from long distance main communication lines to domestic lines. To meet with such the demand for expanded use, mass production and cost reduction in the production of optical fibers must be realized. This can be accomplished most simply by forming a large and a long optical fiber preform and by then drawing it. In the conventional methods for producing optical fibers such as the vapor-phase axial deposition process (VAD process) or the outer vapor-phase deposition process (OVD process), the core portion and the clad portion are all produced by a VAD or OVD process. Thus, scaling up may be disadvantageous because the productivity of the optical fiber preform may be lowered. Furthermore, if one tries to form a larger porous body before vitrification into a transparent body (that is, a soot body obtained by depositing fine silica glass particles, and hereinafter referred to as "a porous soot body"), this may lead to troubles such as the generation of cracks or the drop off of the porous soot body so as to greatly lower the productivity. As a method for producing an optical fiber which overcomes the problems above, in JP-A-7-109136 proposes a high performance method capable of reducing the cost, i.e., the so-called rod-in-tube method, which comprises forming the quartz glass tube for use as the clad portion accounting for 80 % or more of the cross section area, and then heating and melt welding the resulting tube with the core glass rod formed by, for example, the VAD process or the OVD method.

The production method described in the unexamined published Japanese patent application above provides optical fibers of high quality and reduced production cost. However, to realize the production of an optical fiber having a higher quality, it is necessary to further improve the elliptic degree of the optical fiber preform and the like. Accordingly study was conducted to determine why the elliptic degree of the preform is impaired. It was found that the increase in elliptic degree is attributable to heterogeneous heating of the quartz glass tube to be used for the preform during its production. In order to uniformly heat the quartz glass tube above, it was proposed to monitor the heating in real time, and in each case when the heating was not uniform, moving the heating position to maintain a uniform heating state. However, it was impractical because it was technologically difficult to change the heating position of the quartz glass tube fixed on a feeding mechanism of the rod-in-tube apparatus, and because it was costly to construct such a heating furnace. Hence, further studies were conducted. It was found that the inner diameter of the heating furnace greatly influences the elliptic degree of the optical fiber preform, and, that it was feasible to form an optical fiber preform having a small elliptic degree by controlling the ratio of the inner diameter of the heating furnace to the outer diameter of the quartz glass tube for use as the optical fiber so that their relationship fell within a specified range. The present invention isbased on these findings.

### Summary of the Invention

It is an object of the present invention to provide a method for producing a large optical fiber preform having a low elliptic degree.

It is an other object of the present invention to provide a method for producing a large scale preform for optical fibers having high circularity at a low cost.

The present invention is illustrated by way of the Examples, but it should be understood that the present invention is not limited thereto.

These objects and others that will become apparent from the following specification are achieved by providing a method for producing a quartz glass preform for optical fibers, which comprises inserting a core glass rod for use as a preform for optical fibers into a quartz glass tube for use as a preform for optical fibers and then heating them in a heating furnace to melt weld and obtain a monolithic preform, wherein, the ratio of the inner diameter (d) of said heating furnace to the outer diameter (D) of the quartz glass tube for the preform, i.e., (d/D), is set in a range of from 1.5 to 2.0.

The quartz glass tube for preforms above is produced by forming a porous soot body by evaporating high purity silicon tetrachloride followed by flame hydrolysis of the resulting product in an oxyhydrogen flame, depositing fine silica glass particles thus generated, and subjecting the resulting product to heating in an electric furnace to a temperature of 1600 °C for vitrification into a transparent quartz glass ingot. Then, after grinding the outer diameter of the resulting ingot, a hole is perforated therein in accordance with the circular center of the outer diameter by using a core drill boring apparatus, mechanically polishing it if necessary, and then performing, for example, etching treatment using hydrofluoric acid and rinsing with pure water.

Concerning the core glass rod for optical fibers, on the other hand, it is a light transmission part, and the quartz glass rod which constitutes the optical core portion optionally has an optical cladding formed on ist periphery. That is, in the present invention, the term "core glass rod" is a general term inclusive of core rods and cladded core rods. A core rod having no clad portion can be produced by a known method such as a VAD process or a OVD process, and a cladded core rod can be produced by a method comprising forming the core portion and the cladding at a time by means of, for example, a VAD or OVD process; jacketing a core rod with a quartz glass tube; forming the cladding around the core rod by an OVD process and the like; or by a combination of the methods above.

A resistance furnace and an induction furnace are examples of a heating furnace for use in the melt welding of the aforementioned quartz glass tube with the core glass rod. The resistance furnace is a furnace which performs heating by applying an electric current to a heating source (heat radiator) called a heater, and in most cases, a cylindrical heater is used. The induction furnace effects heating by applying a high frequency current and the like in the vicinity of a heating source (heat radiator) called a heater, and in most cases, a cylindrical heater is used. The "inner diameter of the heating furnace" as referred in the present invention means the inner diameter of a cylindrical heater of a heating furnace, which can be a resistance furnace or a induction furnace.

In the present invention, it is essential that the inner diameter of the heating furnace is set to be about 1.5 times the outer diameter of the quartz glass tube for preforms. By setting the inner diameter of the heating furnace in the range above, an optical fiber preform having a small elliptic degree can be produced, and by wire drawing the resulting preform, a single mode optical fiber having a clad non-circularity ratio of 1 % or lower can be produced. The elliptic degree referred herein is a value obtained by continuously measuring the cross section of the optical fiber preform while rotating it in the circumferential direction to observe the maximum and minimum values of the outer diameter, and by then obtaining calculated values in accordance with the formula: [(maximum value - minimum value)/designed value] × 100. For reference, the clad non-circularity ratio is a conventionally used standard to express the elliptic degree of an optical fiber, and a standard product of a single mode optical fiber requires a non-circularity ratio of 1 % or lower.

### Brief Description of the Drawings

Fig. 1 is a cross section view of a preform for optical fibers obtained by melt welding into a monolithic material in a vertical heating furnace.
Fig. 2 is a graph showing the relation between the inner diameter of the heating furnace and the degree of non-circularity of the preform for optical fibers.

### Description of the preferred Embodiments

The present invention is illustrated by way of the Examples, but it should be understood that the present invention is not limited thereto.

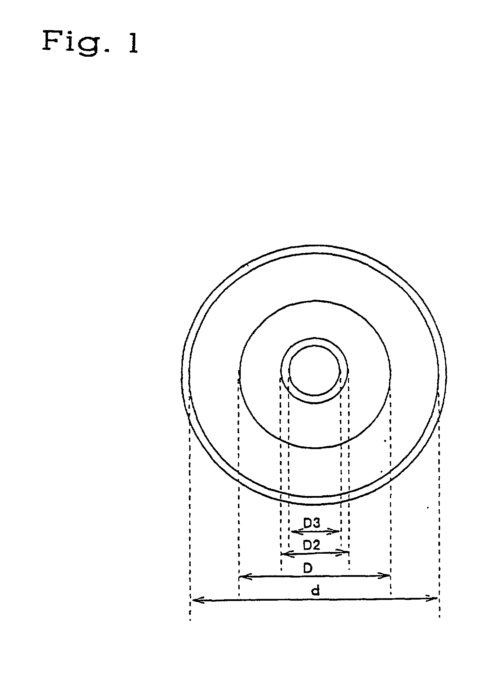

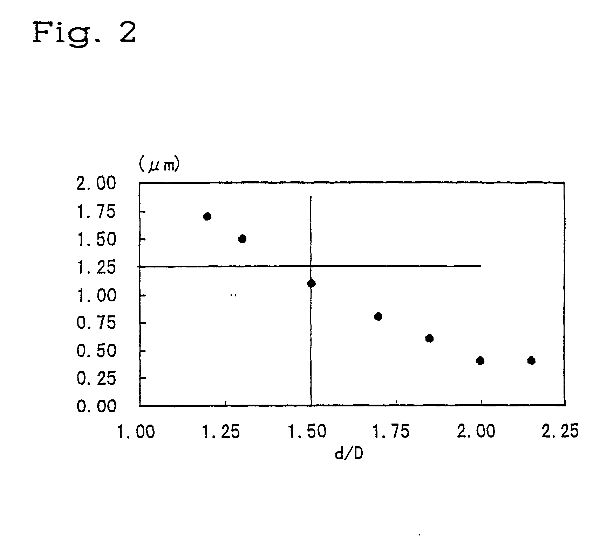

Fig. 1 gives a schematic cross section view of an optical fiber preform produced by using a vertical heating furnace. Referring to Fig. 1, d is the inner diameter of the heating furnace, D is the outer diameter of the quartz glass tube for preforms, D₂ is the inner diameter of said quartz glass tube, and D₃ is the outer diameter of the core glass rod for preforms. Figure 2 shows the change in elliptic ratio with changing d/D, i.e., the ratio of the inner diameter (d) of the heating furnace and the outer diameter (D) of the quartz glass tube for preforms. The elliptic degree is shown by the reduced value of the clad of an optical fiber 125 µm in outer diameter, but since the reduced value changes depending on the outer diameter of the optical fiber preform which depend on, for example, the quartz glass tube for preforms used therein or the stretching during the melt welding in producing a monolithic body, the reduced value was obtained by using a single mode optical fiber 125 µm in outer diameter as the standard. From Fig. 2, it is clearly understood that the elliptic degree remains in a value of 1.25 µm or less for d/D ratios of 1.5 or higher. The elliptic degree of 1.25 µm or less corresponds to a clad non-circularity ratio above of 1 % or lower. However, since there is no improvement in elliptic degree and the construction cost and the like for the heating furnace increases with the d/D value exceeding 2.0, it is not preferred that the ratio of the inner diameter of the heating furnace to the outer diameter of the quartz glass tube for preforms exceeds a value of 2.0.

As described above, an optical fiber preform having a small elliptic degree can be produced at a low cost by setting the value of d/D, i.e., the ratio of the inner diameter of the heating furnace to the outer diameter of the quartz glass tube for preforms, to a range of from 1.5 to 2.0. However, the elliptic degree can be further reduced by performing the melting in producing the monolithic product while rotating the quartz glass tube for preforms and the core glass rod for preforms in the same direction inside the heating furnace, because the heating of the quartz glass tube can be more uniform. In case a horizontal heating furnace is used for the heating furnace, uniform heating can be realized even on a large quartz glass tube for preforms free from bending attributed to its own weight by heating the quartz glass tube and the core glass rod while rotating them in the same direction, and hence, a large optical fiber preform having a low elliptic degree can be produced. The rotation speed is preferably 5 rpm or higher. A rotation speed lower than this range is not preferred, because the elliptic degree reduced to a value of 125-µm clad of an optical fiber cannot be set to 1.25 µm or lower.

### Example 1

Using the OVD process, silicon tetrachloride was vaporized and subjected to flame hydrolysis in an oxyhydrogen flame. The product was deposited around a rotating base to produce a large porous soot body. The resulting soot body was vitrified at 1600 °C to obtain a transparent quartz glass ingot. The outer diameter of the resulting cylindrical quartz glass ingot was subjected to grinding, and the circular center of the outer diameter was obtained by measuring the dimension using a laser outer-diameter measuring apparatus. A hole was perforated at the thus obtained circular center of the outer diameter by using a core drilling apparatus. The quartz glass tube thus obtained was then subjected to etching treatment using a hydrofluoric acid, rinsing using pure water, and drying. The quartz glass tube was measured and was found to have a length of 3500 mm, an outer diameter of 200 mm, and an inner diameter of 50 mm.

Separately, a cladded core rod was produced by a VAD process, and was stretched using a precision automatic stretching machine equipped with an outer diameter controller, in such a manner that the outer diameter is fixed to 45 mm with respect to the inner diameter of the quartz glass tube. The resulting product was carefully inserted into the large quartz glass tube obtained above, and were fixed after matching the circular centers of the core rod and the quartz glass tube. From the lower edge portion of the thus obtained fixed product, it was placed inside a vertical heating furnace from the upper side of the furnace. After melting the lower edge portion, the pressure inside of the tube was reduced by using a vacuum pump to obtain a monolithic body by effecting melt welding. The vertical heating furnace was a resistance furnace, equipped with a cylindrical carbon heater having an outer diameter of 360 mm, an inner diameter of 340 mm, and a length of 350 mm. The oven temperature was set at 2100 °C. Thus, for the production of a monolithic body be melt welding, the ratio of the inner diameter of the heating furnace to the outer diameter of the quartz glass tube for preforms (d/D) was 1.7. The optical fiber preform thus obtained was wire drawn to obtain a 125-µm single mode optical fiber, and the clad-reduced elliptic degree measured 0.80 µm.

### Example 2

An optical fiber preform was produced in the same manner as described in Example 1, except for using a horizontal induction furnace differing in outer diameter and length for the heating furnace, and while rotating the quartz glass tube for preforms and the core glass rod for preforms in the same direction at a rate of 5 rpm. The horizontal heating furnace was an induction furnace, equipped with a cylindrical carbon heater having an outer diameter of 380 mm, an inner diameter of 340 mm, and a length of 500 mm. The oven temperature was set at 2100 °C. Thus, the d/D value was 1.7. The optical fiber preform obtained was found to have a 125-µm clad-reduced elliptic degree of 1.12 µm.

### Comparative Example 1

An optical fiber preform was produced in the same manner as described in Example 1, except for using a cylindrical heater differing in outer and inner diameter. The vertical heating furnace was a resistance furnace, equipped with a cylindrical carbon heater having an outer diameter of 280 mm, an inner diameter of 260 mm, and a length of 350 mm. The oven temperature was set at 2100 °C. Thus, the d/D value was 1.3. The optical fiber preform obtained was found to have a 125 µm clad-reduced elliptic degree of 1.50 µm, which value was found to fall out of the general standard.

### Comparative Example 2

An optical fiber preform was produced in the same manner as described in Example 2, except for changing the rotation speed of the quartz glass tube for preforms and the core glass rod for preforms to 3 rpm. The optical fiber preform obtained was found to have a 125-µm clad-reduced elliptic degree of 1.50 µm, which value was found to fall out of the general standard.

The production method according to the present invention comprises controlling the inner diameter of a heating furnace for use in heating and melt welding a quartz glass tube for preforms and a core glass rod for preforms in a predetermined range with respect to the outer diameter of the quartz glass tube for the preform, thereby enabling the production of a large scale preform for optical fibers having high circularity. Then, by wire drawing the preform, high quality optical fibers having a low cladding non-circularity can be obtained at a low cost. Thus, the production method according to the present invention is of high industrial value.

## Claims

1. A method for producing a quartz glass preform for optical fibers, which comprises inserting a core glass rod for use as a preform for optical fibers into a quartz glass tube for use as a preform for optical fibers and then heating them in a heating furnace to melt weld and obtain a monolithic preform, wherein, the ratio of the inner diameter (d) of said heating furnace to the outer diameter (D) of the quartz glass tube for the preform, (d/D), is set in a range of from 1.5 to 2.0.

2. A method for producing a quartz glass preform for optical fibers as claimed in Claim 1, wherein the quartz glass tube and the core glass rod are melt welded to obtain a monolithic material by rotating them in the heating furnace in the same direction.

3. A method for producing a quartz glass preform for optical fibers as claimed in Claim 2, wherein, the quartz glass tube and the core glass rod are melt welded to obtain a monolithic material by rotating them in the heating furnace in the same direction at a rate of 5 rpm or higher.

4. A method for producing a quartz glass preform for optical fibers as claimed in any Claims 1 to 3, wherein, the heating furnace is a resistance furnace or an induction furnace.

## Patentansprüche

1. Verfahren zur Herstellung einer Vorform aus Quarzglas für optische Fasern, umfassend ein Einsetzen eines Kernglasstabes als Halbzeug für optische Fasern in ein Quarzglasrohr als Halbzeug für optische Fasern, und anschließendes Aufheizen derselben in einem Heizofen zum Zwecke des Zusammenschmelzens, unter Bildung einer monolithischen Vorform, **dadurch gekennzeichnet, dass** das Verhältnis von Innendurchmesser (d) des Heizofens zum Außendurchmesser (D) des Quarzglasrohres für die Vorform, (d/D), in einem Bereich zwischen 1,5 und 2 eingestellt wird.

2. Verfahren zur Herstellung einer Vorform aus Quarzglas für optische Fasern nach Anspruch 1, **dadurch gekennzeichnet, dass** das Quarzglasrohr und der Kernglasstab unter Bildung eines monolithischen Materials zusammengeschmolzen werden, indem sie in dem Heizofen in gleicher Richtung rotiert werden.

3. Verfahren zur Herstellung einer Vorform aus Quarzglas für optische Fasern nach Anspruch 2, **dadurch gekennzeichnet, dass** das Quarzglasrohr und der Kernglasstab unter Bildung eines monolithischen Materials zusammengeschmolzen werden, indem sie in dem Heizofen in der gleichen Richtung mit einer Umdrehungsgeschwindigkeit von 5/min oder mehr rotiert werden.

4. Verfahren zur Herstellung einer Vorform aus Quarzglas für optische Fasern nach einem der Ansprüche 1 bis 3, **dadurch gekennzeichnet, dass** der Heizofen ein Widerstandsheizofen oder ein Induktionsofen ist.

## Revendications

1. Procédé de fabrication d'une préforme en verre de silice pour fibres optiques, comprenant l'insertion d'une barre en verre de coeur destinée à être utilisée comme préforme pour des fibres optiques dans un tube en verre de silice destiné à être utilisé comme préforme pour fibres optiques et ensuite le fait de les chauffer dans un four de chauffage pour les souder par fusion et obtenir une préforme monolithique, dans lequel le rapport du diamètre interne (d) dudit four de chauffage au diamètre externe (D) du tube en verre de silice pour la préforme (d/D) est établi dans la plage de 1,5 à 2,0.

2. Procédé de fabrication d'une préforme en verre de silice pour fibres optiques selon la revendication 1, dans lequel le tube en verre de silice et la barre en verre de coeur sont soudés par fusion pour obtenir un matériau monolithique en les pivotant dans le four de chauffage dans la même direction.

3. Procédé de fabrication d'une préforme en verre de silice pour fibres optiques selon la revendication 2, dans lequel le tube en verre de silice et la barre en verre de coeur sont soudés par fusion pour obtenir un matériau monolithique en les pivotant dans le four de chauffage dans la même direction à une vitesse de 5 tours par minute ou supérieure.

4. Procédé de fabrication d'une préforme en verre de silice pour fibres optiques selon l'une quelconque des revendications 1 à 3, dans lequel le four de chauffage est un four à résistance ou un four à induction.
